(19) Europäisches Patentamt
European Patent Office
Office européen des brevets

(11) Veröffentlichungsnummer: **0 099 497**
**A1**

# (12) EUROPÄISCHE PATENTANMELDUNG

(21) Anmeldenummer: 83106402.7

(22) Anmeldetag: 01.07.83

(51) Int. Cl.³: A 01 N 57/12
//(A01N57/12, 53/00)

(30) Priorität: 10.07.82 DE 3225943

(43) Veröffentlichungstag der Anmeldung: 01.02.84 Patentblatt 84/5

(84) Benannte Vertragsstaaten: AT BE CH DE FR GB IT LI LU NL SE

(71) Anmelder: A. Nattermann & Cie. GmbH
Nattermannallee 1
D-5000 Köln 30(DE)

(72) Erfinder: Ghyczy, Miklos, Dr.
Am Serviesberg 12
D-5000 Köln 41(DE)

(72) Erfinder: Imberge, Paul-Robert
Kiefernweg 5
D-5024 Pulheim(DE)

(72) Erfinder: Wendel, Armin
Goethestrasse 20
D-5000 Köln 40(DE)

(74) Vertreter: Redies, Bernd, Dr. rer. nat. et al,
Redies, Redies, Türk & Gille Brucknerstrasse 20
D-4000 Düsseldorf 13(DE)

## (54) Insektizid-Formulierungen.

(57) Die vorliegende Erfindung betrifft neue Insektizid-Formulierungen, die aus einem oder mehreren Wirkstoffen aus der Gruppe der Pyrethroide und einem oder mehreren Phospholipiden neben üblichen Träger-, Verdünnungs-, Lösungs- und/oder anderen inerten Hilfsmitteln bestehen, wobei das Gewichtsverhältnis Wirkstoff bzw. Wirkstoffgemisch zu reinem Phospholipid bzw. Gemisch aus reinen Phospholipiden 1:20 bis 1:50 beträgt.



Croydon Printing Company Ltd.

Anmelder: A. Nattermann & Cie GmbH
Nattermannallee 1, 5000 Köln 30

Titel: Insektizid-Formulierungen

## Beschreibung

Die Erfindung betrifft neue Pyrethroid-haltige Insektizid-Formulierungen. Die neuen Formulierungen zeichnen sich besonders durch eine starke Haftfähigkeit sowie lang anhaltende Wirkung aus.

Pyrethroide haben durch ihre hohe, schnell eintretende insektizide Wirkung und geringe Toxizität für Mensch und Tier in den letzten Jahren große Bedeutung erlangt. Die natürlichen sowie die synthetischen Pyrethroide sind schwer wasserlöslich, wärmeempfindlich u nd werden an der Luft leicht inaktiviert. Darüberhinaus sind Pyrethroide durch ihre aufwendige Isolierung (natürliche Pyrethroide) bzw. aufwendige Synthesen sehr kostspielige Produkte.

Ziel der vorliegenden Erfindung ist es deshalb, neue Insektizid-Formulierungen, die als aktiven Wirkstoff Pyrethroide enthalten, zur Verfügung zu stellen, die mit geringen Mengen an Wirkstoff eine gute, lang anhaltende Wirksamkeit und gute Haftung auf den zu schützenden Gütern zeigen.

Es wurde nun überraschenderweise gefunden, daß man hochwirksame Formulierungen zur Bekämpfung von Schadinsekten erhalten kann, wenn man die Pyrethroide zusammen mit einem Phospholipid aus der Gruppe Phosphatidylcholin, Phosphatidylethanolamin oder N-Acylphosphatidylethanolamin oder einem Gemisch aus mehreren solcher Phospholipiden im Gewichtsverhältnis 1 : 20 bis 1 : 50 neben üblichen Träger-, Verdünnungs-, Lösungs-, Versprühungs- und/oder anderen inerten Hilfsmitteln einsetzt.
Durch den Zusatz von Phospholipiden wird eine wesentlich bessere Verteilung und eine bessere Haftung und damit auch eine lang anhaltende Wirksamkeit erzielt. Dadurch kann auch die Aufwandmenge an aktivem Wirkstoff erheblich (bis zu 60 %) reduziert werden.
Eine gute Verteilung ist deshalb von großer Bedeutung, da zum Besprühen von Feldern, z.B. von Baumwoll- oder Tabakfeldern, nur 25 - 70 g aktiver Wirkstoff je Hektar von handelsüblichen Formulierungen benötigt werden. Bei den neuen Formulierungen können noch Wirkstoffmengen von 10 - 60 g je Hektar gut verteilt werden, ohne daß die Wirksamkeit dadurch beeinflußt ist.
Die neuen Formulierungen eignen sich auch zur Behandlung von Ektoparasiten bei Haus- und Weidetieren. Sie zeigen eine gute Haftung auf der Tierhaut bzw. dem Haarkleid. Beim Besprühen von Stallwänden haftet der Wirkstoff gut an der Wand und bildet einen lang anhaltenden Schutz gegen Insekten wie z.B. Fliegen.

Als Phospholipide kommen natürliche oder synthetische Phospholipide aus der Gruppe Phosphatidylcholin, den hydrierten Phosphatidylcholinen, Phosphatidylethanolamin, den N-Acyl-phosphatidylethanolaminen, Phosphatidylinosit, Phosphatidylglycerol oder ein Gemisch aus mehreren solcher Phospholipiden, insbesondere jedoch Gemisch aus Phosphatidylcholin und Phosphatidylethanolamin oder Phosphatidylcholin mit Phosphatidylethanolamin und N-Acylphosphatidylethanolamin oder sonstige Phosphatidyl-Mischungen mit 15 - 75 % Phosphatidylcholin-Anteil in Frage.

Besonders bevorzugt sind natürliche Phosphatidylcholine, die nach den in den folgenden Patentschriften beschriebenen Verfahren erhalten werden können: DE-PS 10 47 579, DE-PS 10 53 299, DE-PS 16 17 679, DE-PS 16 17 680, DE-OS 30 47 048, DE-OS 30 47 012, DE-OS 30 37 011.

Als Pyrethroide kommen natürliche oder synthetische Pyrethroide der allgemeinen Formel I in Frage

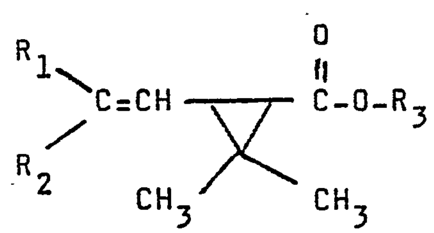

i

$R_1$ = $CH_3$, COOH, $COOCH_3$, Cl, Br
$R_2$ = $CH_3$, Cl, Br, Aryl, Halogen subst. Aryl
$R_3$ = subst. Cyclopenten, subst. Furylmethyl, Phtalimidomethyl, Phenoxybenzyl oder Phenalkenyl-Gruppen.

---

Beispiele für Verbindungen der Formel I:

| | $R_1$ | $R_2$ | $R_3$ | |
|---|---|---|---|---|
| 1. | $-CH_3$ | $-CH_3$ | 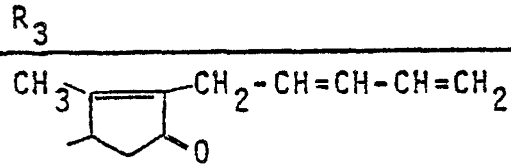 | Pyrethrin I |
| 2. | $-COOCH_3$ | $-CH_3$ | 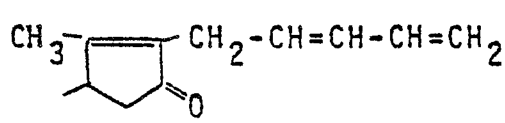 | Pyrethrin II |

0099497

| | $R_1$ | $R_2$ | $R_3$ | |
|---|---|---|---|---|
| 3. | $-CH_3$ | $-CH_3$ | 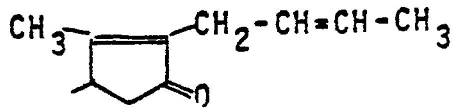 | Cinerin I |
| 4. | $-COOCH_3$ | $-CH_3$ | 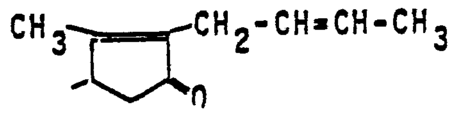 | Cinerin II |
| 5. | $-CH_3$ | $-CH_3$ | 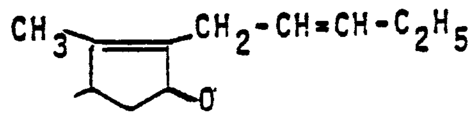 | Jasmolin I |
| 6. | $-COOCH_3$ | $-CH_3$ | 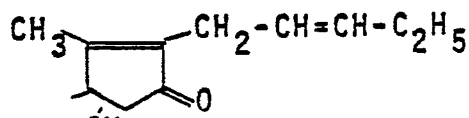 | Jasmolin II |
| 7. | $-CH_3$ | $-CH_3$ | 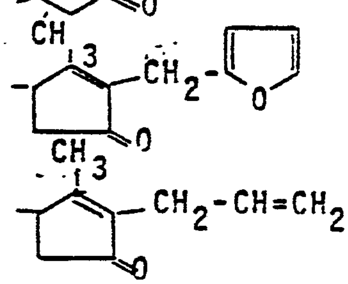 | Furethrin |
| 8. | $-CH_3$ | $-CH_3$ | | Allethrin |
| 9 | $-CH_3$ | $-CH_3$ | 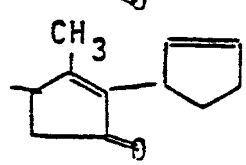 | Cyclethrin |
| 10. | $-CH_3$ | $-CH_3$ | 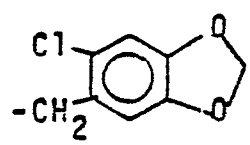 | Bathrin |
| 11. | $-CH_3$ | $-CH_3$ | 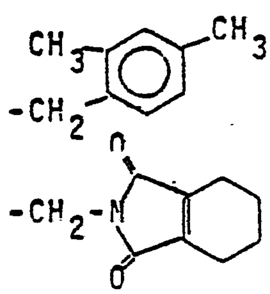 | Dimethrin |
| 12. | $-CH_3$ | $-CH_3$ | | Phthalthrin |
| 13. | $-CH_3$ | $-CH_3$ | 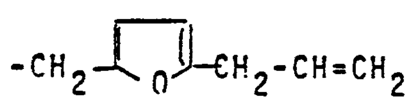 | Japothrin |

| | $R_1$ | $R_2$ | $R_3$ | |
|---|---|---|---|---|
| 14. | $-CH_3$ | $-CH_3$ | 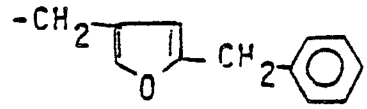 | Pyresthrin |
| 15. | $-CH_3$ | $-CH_3$ | 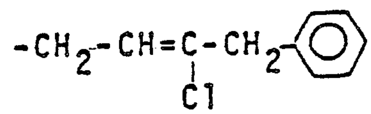 | Butethrin |
| 16. | $-CH_3$ | $-CH_3$ | 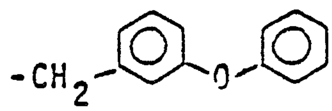 | Phenothrin |
| 17. | -Cl | -Cl | 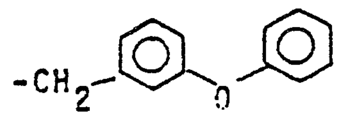 | Permethrin |
| 18. | -Br | -Br | 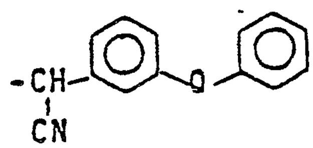 | Decamethrin |
| 19. | -Cl | -Cl | 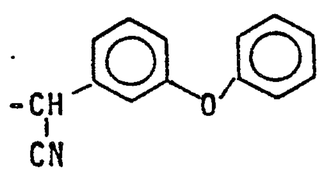 | Cypermethrin |
| 20 | -Cl | 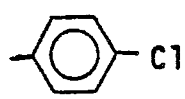 | 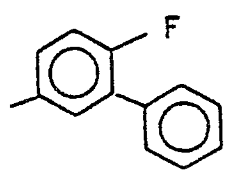 | |

Bei den Verbindungen der Formel I handelt es sich um bekannte Verbindungen, die sich als Insektizide bereits bewährt haben (Chemie der Pflanzenschutz- und Schädlingsbekämpfungsmittel, Springer 1970, S. 87 ff).

Zur Herstellung der neuen Insektizid Formulierungen wird das entsprechende Phospholipid in einem geeigneten Lösungsmittel, wie z.B. Toluol, Essigester, Xylol, Benzin, Methanol oder Ethanol oder Gemische dieser Lösungsmittel gelöst. Die Auswahl des Lösungsmittels richtet sich nach den Lösungseigenschaften des eingesetzten Wirkstoffes. In die Phospholipid-Lösung wird ggfs. unter Erwärmung der Wirkstoff oder eine im Handel erhältliche Formulierung aufgelöst. Nach Beendigung des Lösungsvorganges wird das Lösungsmittel im Vakuum unter Erwärmung abdestilliert. Das so erhaltene Produkt wird ggfs durch Zugabe geeigneter inerter Hilfsmittel, wie Füllstoffe, Quellmittel, Emulgatoren, Netzmittel, Versprühungsmittel zu üblichen handelsfähigen Produkten verarbeitet.

Die neuen Insektizid-Formulierungen können auch hergestellt werden, indem der Wirkstoff oder eine handelsübliche Formulierung, das Phospholipid und die noch erwünschten Hilfsmittel zusammen im Lösungsmittel oder Lösungsmittelgemisch durch Erwärmen gelöst bzw. aufgeschlämmt werden und dann das oder die Lösungsmittel im Vakuum abgezogen werden. Erhalten wird eine fertige Mischung, die sofort zur Anwendung bereit steht.

Bei Wirkstoffen, die in Wasser oder Wasser-Alkohol-Mischungen löslich sind, wird vorteilhafterweise der Wirkstoff zuerst in Wasser oder Wasser-Alkohol-Mischungen gelöst und das Phospholipid oder die Phospholipidmischung unter Rühren oder durch die Anwendung von Ultraschall zu einer Lösung oder Emulsion verarbeitet. Die gegebenenfalls benötigten Emulgatoren können vor oder nach diesem Rührvorgang zugesetzt werden. Die so erhaltene Emulsion oder Lösung wird üblicherweise, wie z.B. durch Destillation,

Sprühtrocknen, Lyophilisieren, von dem Lösungsmittelgemisch oder Wasser befreit. Das resultierende Produkt kann als Trockenprodukt ggfs. unter Zusatz von Hilfs- und Füllstoffen eingesetzt werden. Auch kann das Produkt wieder unter Zusatz von geeigneten Hilfsstoffen in Wasser emulgiert oder gelöst werden und als flüssiges Produkt eingesetzt werden.

Bevorzugterweise werden Emulsionskonzentrate hergestellt, indem das Phospholipid in Gegenwart von Co-Emulgatoren in einem Lösungsmittel oder Lösungsmittelgemisch gelöst wird und das Pyrethrin unter Rühren und leichter Erwärmung zugegeben wird. Das erhaltene Konzentrat kann vor der Anwendung unter Zugabe der notwendigen Wassermenge zu üblichen Spritzbrühen verarbeitet werden.

Trägerstoffe sind z.B. Talkum, Kaolin, Bentonit, Kieselgur, Kalk oder Gesteinsmehl. Weitere Hilfsmittel sind z.B. oberflächenaktive Verbindungen, wie Seifen (Fettsäuresalze), Fettalkoholsulfonate oder Alkylsulfonate. Als Stabilisatoren oder Schutzkoloide können Gelatine, Kasein, Albumin, Stärke oder Methylcellulose eingesetzt werden. Desweiteren können auch Spreitmittel, wie Silikonöle, Fettsäureester, Triglyceride, Fettalkohol oder Fettsäuren eingesetzt werden.
Als übliche Synergisten für Pyrethroide können z.B. Piperonylbutoxid, Safroxan, Sesamex oder Sesamin eingesetzt werden.
Die neuen Formulierungen können in Form von Spray, Lösungen, Emulsionen oder Suspensionen eingesetzt werden.

Beispiel 1

2,000 g Pyrethrum-Extrakt der Firma INEXA, Quito-Ecuador Lot 1041 (Pyrethringehalt ca. 59,3 %)
2.105 g Phospholipid
1.595 g Isophoron
0,800 g Glycerin
0,265 g Cremophor EL
0,235 g Methanol

Das Phospholipid wird in Isophoron-, Glycerin-, Cremophor-, Methanol-Gemisch unter Rühren gelöst und zu dieser Lösung wird das Pyrethrum-Extrakt unter Rühren und leichter Erwärmung zugemischt.

Analog Beispiel 1 werden folgende Mischungen hergestellt:

Beispiel 2

0,40 g Permethrin
3,00 g Piperonylbutoxid
2,00 g Phospholipid
1,75 g Isophoron
0,75 g Glycerin
0,25 g Cremophor EL
0,25 g N-(2-Hydroxyethyl)-capronsäureamid

Beispiel 3

1,70 g Cypermethrin
1,70 g Piperonylbutoxid
2,00 g Phospholipid
1,75 g Isophoron
0,75 g Glycerin
0,25 g Cremophor EL
0,25 g Softigen 767

Beispiel 4

| | |
|---|---|
| 0,90 g | Decamethrin |
| 2,50 g | Piperonylbutoxid |
| 2,00 g | Phospholipid |
| 1,75 g | Isophoron |
| 0,75 g | Glycerin |
| 0,25 g | Cremophor EL |
| 0,25 g | Softigen 767 |

Beispiel 5

| | |
|---|---|
| 0,20 g | Permethrin |
| 3,20 g | Piperonylbutoxid |
| 1,66 g | Phospholipid |
| 0,83 g | Cremophor EL |
| 0,065 g | Triethylamin |
| 1,17 g | Toluol |
| 1,17 g | Xylol |
| 0,625 g | DMSO |
| 0,33 g | Pflanzenöl |
| 0,83 g | N-(2-Hydroxyethyl)-capronsäureamid |

Beispiel 6

| | |
|---|---|
| 1,70 g | Permethrin |
| 1,70 g | Piperonylbutoxid |
| 1,66 g | Phospholipid |
| 1,66 g | Isophoron |
| 0,83 g | Cremophor EL |
| 0,83 g | N-(2-Hydroxyethyl)-capronsäureamid |
| 2,15 g | DMSO |
| 0,63 g | Glycerin |
| 0,18 g | Methanol |
| 0,33 g | Pflanzenöl |

Die in den vorstehenden Beispielen 1 bis 6 verwendeten Phospholipid-Produkte hatten die folgende Zusammensetzung, wobei die angegebenen Prozente Gewichtsprozente sind:

Beispiel 1:
4o % Phosphatidylcholin
28 % Phosphatidylethanolamin
27 % N-acylphosphatidylethanolamin
5 % sonstige Phospholipide

Beispiel 2:
45 % Phosphatidylcholin
25 % Phosphatidylethanolamin
21 % N-acylphosphatidylethanolamin
9 % sonstige Phospholipide

Beispiel 3:
42 % Phosphatidolcholin
25 % Phosphatidylethanolamin
25 % N-acylphosphatidylethanolamin
8 % sonstige Phospholipide

Beispiel 4:
4o % Phosphatidolcholin
3o % Phosphatidylethanolamin
25 % N-acylphosphatidylethanolamin
5 % sonstige Phospholipide

Beispiel 5:
96 % Phosphatidolcholin
4 % sonstige Phospholipide

Beispiel 6:
3o % Phosphatidylcholin
16 % N-acylphosphatidylethanolamin
24 % Phosphatidylethanolamin
3o % sonstige Phospholipide

## Patentansprüche

1. Insektizid-Formulierungen, **dadurch gekennzeichnet**, daß sie aus

a) einem insektiziden Wirkstoff aus der Gruppe der Pyrethroide

und

b) einem oder mehreren Phospholipiden aus der Gruppe Phosphatidylcholin, den hydrierten Phosphatidylcholinen, Phosphatidylethanolamin, den N-Acyl-phosphatidylethanolaminen, Phosphatidylinosit, Phosphatidylserin, Lysolecithin und Phosphatidylglycerol

im Gewichtsverhältnis a : b von 1 : 20 bis 1 : 50 neben üblichen Träger-, Verdünnungs-, Lösungs-, Versprühungs- und/oder anderen inerten Hilfsmittel bestehen.

2. Formulierungen gemäß Anspruch 1, dadurch gekennzeichnet, daß als Phospholipid Mischungen aus Phosphatidylcholin und Phosphatidylethanolamin oder Mischungen aus Phosphatidylcholin, Phosphatidylethanolamin und N-Acyl-phosphatidylethanolamin eingesetzt werden.

3. Formulierungen gemäß der Ansprüche 1 bis 2, dadurch gekennzeichnet, daß als Phospholipid ein Phospholipid mit einem Gehalt von 15 - 75 % Phosphatidylcholin eingesetzt wird.

4. Formulierung gemäß der Ansprüche 1-3, dadurch gekennzeichnet, daß als Pyrethroid eine Verbindung der allgemeinen Formel I

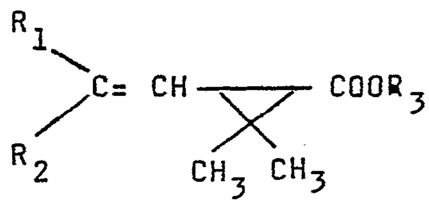

I

$R_1$ = $CH_3$, COOH, $COOCH_3$, Cl, Br
$R_2$ = $CH_3$, Cl, Br, Aryl, Halogen subst. Aryl
$R_3$ = subst. Cyclopenten, subst. Furylmethyl, Phthalimidomethyl, Phenoxybenzyl oder Phenalkenyl-Gruppen

eingesetzt wird.

5. Formulierungen gemäß der Ansprüche 1 - 4, dadurch gekennzeichnet, daß als Pyrethroid Permethrin, Decamethrin oder Cypermethrin eingesetzt wird.

6. Verwendung der Formulierungen gemäß einem oder mehreren der Ansprüche 1 - 5 zur Bekämpfung von Insekten

7. Verfahren zur Herstellung von Formulierungen gemäß einem oder mehreren der Ansprüche 1 - 5, dadurch gekennzeichnet, daß das Phospholipid in einem organischen Lösungsmittel bzw. Lösungsmittelgemisch gelöst wird und in diese Lösung ggfs. durch Erwärmen und/oder Rühren der Wirkstoff gelöst und anschließend das Lösungsmittel oder Lösungsmittelgemisch im Vakuum abgezogen wird und die erhaltene Mischung unter Zusatz üblicher Füll- und Hilfsmittel in eine übliche Anwendungsform überführt wird.

8. Verfahren zur Herstellung von Formulierungen gemäß einem oder mehreren der Ansprüche 1 - 5, dadurch gekennzeichnet, daß das oder die Wirkstoffe mit einem oder mehreren Phospholipiden ggfs. unter Zusatz üblicher

Füll- und Hilfsmittel in einem organischen Lösungsmittel gelöst bzw. aufgeschlämmt und das Lösungsmittel danach abgezogen wird.

9. Verfahren zur Herstellung von Formulierungen gemäß einem oder mehreren der Ansprüche 1 - 5, dadurch gekennzeichnet, daß ein oder mehrere, in Wasser oder Alkohol lösliche Wirkstoffe in Wasser und Wasser-Alkohol-Mischungen zusammen mit einem oder mehreren Phospholipiden unter Rühren und/oder leichter Erwärmung und/oder Ultraschall gelöst und das Lösungsmittel bzw. Lösungsmittelgemisch abgezogen wird.

10. Verfahren zur Herstellung von Formulierungen als Emulsionskonzentrat gemäß einem oder mehreren der Ansprüche 1-5, dadurch gekennzeichnet, daß das Phospholipid in Gegenwart eines Emulgators in einem organischen Lösungsmittel bzw. Lösungsmittelgemisch gelöst wird und in diese Lösung ggfs. durch Erwärmen und/oder Rühren der Wirkstoff gelöst wird.

11. Verwendung von Emulsionskonzentraten gemäß Anspruch 10 zur Bekämpfung von Insekten, dadurch gekennzeichnet, daß das Konzentrat mit Wasser verdünnt und als Spritzbrühe eingesetzt wird.

0099497

Europäisches Patentamt

# EUROPÄISCHER RECHERCHENBERICHT

Nummer der Anmeldung

EP 83 10 6402

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| P,X | EP-A-0 068 297 (A. NATTERMANN & CIE.)<br>* Seite 3, Zeilen 1-18; Seite 3, Zeile 35 - Seite 7, Zeile 3; Beispiele 2,15,21,23-25; Ansprüche 1-8, 24-27 * | 1-11 | A 01 N 57/12 //<br>(A 01 N 57/12<br>A 01 N 53/00 ) |
| Y | US-A-2 006 227 (E.W. BOUSQUET)<br>* Seite 1, linke Spalte, Zeilen 27-56; Seite 2, linke Spalte, Zeilen 1-31 * | 1-4,6 | |
| A | US-A-1 938 864 (B. REWALD)<br>* Seite 1, Zeilen 1-36 * | 1 | |
| A | US-A-4 241 046 (D.P. PAPAHADJOPOULOS)<br>* Spalte 3, Zeile 65 - Spalte 4, Zeile 16; Spalte 4, Zeile 39 - Spalte 6, Zeile 16; Anspruch * | 1-3,7-10 | RECHERCHIERTE SACHGEBIETE (Int. Cl. 3)<br>A 01 N |

Der vorliegende Recherchenbericht wurde für alle Patentansprüche erstellt.

| Recherchenort | Abschlußdatum der Recherche | Prüfer |
|---|---|---|
| DEN HAAG | 21-10-1983 | FLETCHER A.S. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument